# EUROPÄISCHE PATENTSCHRIFT

(11) **EP 0 489 789 B1**
(45) Veröffentlichungstag und Bekanntmachung des Hinweises auf die Patenterteilung: **23.03.1994**
(21) Anmeldenummer: 90912907.4
(22) Anmeldetag: 24.08.1990
(51) Int. Cl.: F02D 41/40

(54) **KRAFTSTOFF-EINSPRITZVORRICHTUNG FÜR EINE LUFTVERDICHTENDE BRENNKRAFTMASCHINE**
FUEL-INJECTION SYSTEM FOR AN AIR-COMPRESSION INTERNAL-COMBUSTION ENGINE
DISPOSITIF D'INJECTION DE CARBURANT POUR MOTEURS A COMBUSTION INTERNE A COMPRESSION D'AIR

(30) Priorität: 31.08.1989 DE 3928875
(43) Veröffentlichungstag der Anmeldung: 17.06.1992
(73) Patentinhaber: AUDI AG, 85045 Ingolstadt (DE)
(72) Erfinder: BAUDER, Richard, D-7107 Neckarsulm (DE)
(86) Internationale Anmeldenummer: EP9001418
(87) Internationale Veröffentlichungsnummer: WO9103637

(56) Entgegenhaltungen:
- EP-A- 59 586
- EP-A- 71 557
- EP-A- 221 832
- Patent Abstracts of Japan, Band 9, Nr. 245 (M-418)(1968), 2. Oktober 1985, & JP, A, 6098147 (TOYOTA JIDOSHA K.K.) 1. Juni 1985
- Patent Abstracts of Japan, Band 9, Nr. 238 (M-416)(1961), 25. September 1985, & JP, A, 6093155 (HITACHI SEISAKUSHO K.K.) 24. Mai 1985

## Beschreibung

Die Erfindung bezieht sich auf eine Kraftstoff-Einspritzvorrichtung für eine luftverdichtende Brennkraftmaschine gemäß dem Oberbegriff des Anspruchs 1, wie sie in Fahrzeugen vom BMW Typ BMW TD (Baureihe 1987) verwirklicht ist.

Bei dieser Einspritzvorrichtung wird die Einspritzmenge bei betriebswarmem Motor durch das sogenannte Rauchkennfeld <M_{E} =f (Luftdruck, Drehzahl) oder M_{E} = f (Luftmasse/Drehzahl)> und die Drehmomentbegrenzung <M_{E} = f (Drehzahl)> begrenzt. Durch die Minimalwert-Auswahlstufe wird nur der Minimalwert der aus dem Rauchkennfeld und der Drehmomentbegrenzungs-Kennlinie entnommenen Kraftstoffmengen für einen bestimmten Betriebspunkt an das Mengenstellwerk weitergeleitet.

Üblicherweise wird bei luftverdichtenden Brennkraftmaschinen mittels des elektronisch geregelten Spritzverstellers mit ansteigender Last ein früherer Spritzbeginn eingeregelt. Bekannt ist auch, daß die Rauchzahl der Brennkraftmaschine durch den Spritzbeginn stark beeinflußt werden kann.

Beim Übergang von Schubbetrieb oder Teillast auf Vollast wurde bei der gattungsgemäßen Einspritzvorrichtung eine zu hohe Rauchentwicklung festgestellt. Die Ursache dafür ist, daß durch die elektronische Steuereinheit zwar die für diese Laständerung erforderliche, erhöhte Einspritzmenge freigegeben wird, der Spritzversteller jedoch diesem Lastwechsel nur verzögert folgt, so daß erhebliche Abweichungen des Ist-Spritzbeginns vom Soll-Spritzbeginn auftreten, die zu der erwähnten Rauchentwicklung führen. Ein schnelleres Verstellen des Spritzverstellers ist aus hydraulischen und mechanischen Gründen nicht machbar.

Der Erfindung liegt die Aufgabe zugrunde, eine Kraftstoff-Einspritzvorrichtung der gattungsgemäßen Art zu schaffen, bei der die erwähnte Rauchentwicklung vermieden wird.

Diese Aufgabe wird erfindungsgemäß durch die im Kennzeichen des Anspruchs 1 angegebenen Mermale gelöst.

Durch den erfindungsgemäßen Vorschlag wird erreicht, daß nur diejenige Kraftstoffmenge eingespritzt wird, mit der bei dem vorliegenden Ist-Spritzbeginn ein rauchfreier Betrieb sichergestellt ist. Des weiteren werden auch die Partikelwerte und die HC-Emissionen positiv beeinflußt.

Es ist auch möglich, in dem zusätzlichen Kennfeld die maximale Einspritzmenge als Funktion der Abweichung des Ist-Spritzbeginns vom Soll- Spritzbeginn in Abhängigkeit von der Drehzahl zu speichern.

Aus der EP-A 0 059 586 ist eine elektronische Kraftstoff-Einspritzvorrichtung für eine luftverdichtende Brennkraftmaschine bekannt, bei der zwar ebenfalls der Luftdruck, die Luftmasse, die Drehzahl und den Einspritzbeginn zur Bestimmung der Einspritzmenge herangezogen werden, jedoch im Gegensatz zu der Einspritzvorrichtung, von der die Erfindung ausgeht, in einem dreidimensionalen Kennfeld für alle Betriebszustände eine zulässige Einspritzmenge, die noch durch den Ansaugdruck modifiziert wird, als Funktion des Kraftstoff/Luft-Verhältnisses, der gemessenen Drehzahl und des gemessenen Einspritzbeginns gespeichert ist. Diese Tabelle ist auch geeignet, die für den rauchfreien Betrieb zulässige Einspritzmenge zu bestimmen, so daß das durch die vorliegende Erfindung zu lösende Problem dort nicht auftritt.

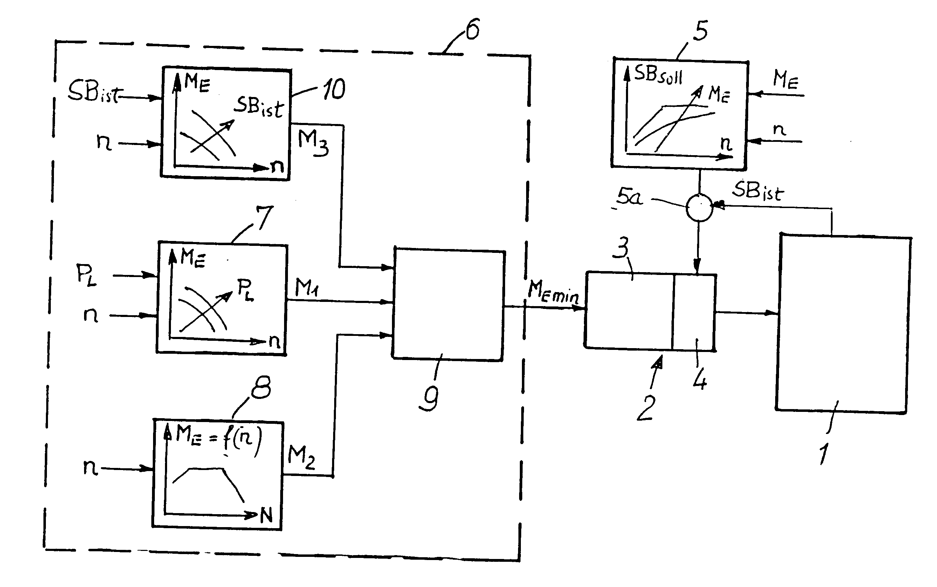

Ein Ausführungsbeispiel der Erfindung wird im folgenden unter Bezugnahme auf die Zeichnung beschrieben, in der ein stark vereinfachtes Blockschaltbild einer Kraftstoff-Einspritzvorrichtung für eine luftverdichtende Brennkraftmaschine dargestellt ist.

Mit 1 ist eine luftverdichtende Brennkraftmaschine bezeichnet, die Kraftstoff von einer Einspritzpumpe 2 erhält. Die im Ausführungsbeispiel als Verteiler-Einspritzpumpe ausgebildete Einspritzpumpe enthält ein schematisch angedeutetes Mengenstellwerk 3 sowie einen Spritzversteller 4. Der Spritzversteller 4 erhält Signale von einem Spritzbeginngeber 5, in welchem der Spritzbeginn-Sollwert in Abhängigkeit von Betriebsparametern gespeichert ist. Ein Komparator 5a erhält vom Spritzbeginngeber 5 den Sollwert und von einem Sensor im Halter der Einspritzdüse das Ist-Signal des Einspritzbeginns, vergleicht dieses Signal mit dem Sollwert und gibt ein entsprechendes Signal an den Spritzversteller.

Das Mengenstellwerk 3 erhält Signale von einer elektronischen Steuereinheit 6, die unter anderem ein Rauchkennfeld 7 und eine Drehmomentbegrenzungs-Kennlinie 8 enthält. Eine Minimalwert-Auswahlstufe 9 wählt den kleineren der für den betreffenden Betriebspunkt aus dem Rauchkennfeld 7 und aus der Drehmomentbegrenzungs-Kennlinie 8 ermittelten Kraftstoffmengen M₁ bzw M₂ aus und gibt nur ein der kleineren Menge entsprechendes Signal an das Mengenstellwerk 3 weiter.

Zusätzlich enthält die Steuereinheit 6 ein weiteres Kennfeld 10, in welchem die für einen rauchfreien Betrieb maximale Einspritzmenge als Funktion der Drehzahl und des Ist-Spritzbeginns gespeichert ist. Das Signal der aus dem Kennfeld 10 ermittelten Einspritzmenge M₃ wird ebenfalls der Minimalwert-Auswahlstufe 9 zugeführt, die nunmehr unter den drei ihr zugeführten Werten M₁, M₂ und M₃ den kleinsten auswählt und ein entsprechendes Signal an das Mengenstellwerk 3 weitergibt.

Durch das Vorsehen des zusätzlichen Kennfeldes 10 wird zuverlässig erreicht, daß die Einspritzmenge nicht über dem Wert liegt, bei dem ein rauchfreier Betrieb möglich ist. Damit wird die systembedingte Verzögerung des Nachregelns des elektromechanisch oder elektrohydraulisch arbeitenden Spritzverstellers 4 insbesondere bei einem schnellem Lastwechsel, die zu Rauchentwicklung führen kann, ausgeschaltet.

## Patentansprüche

1. Kraftstoff-Einspritzvorrichtung für eine luftverdichtende Brennkraftmaschine (1), mit einer elektronischen Steuereinheit (6) für ein Mengenstellwerk (3) zur Bestimmung der Einspritzmenge, die mindestens ein Rauchkennfeld (7) mit Einspritzmengenwerten in Abhängigkeit von Luftdruck und Drehzahl oder Luftmasse und Drehzahl enthält sowie ein Drehmomentbegrenzungs - Kennlinie (8) mit Einspritzmengenwerten in Abhängikeit von der Drehzahl aufweist, denen eine Minimalwert-Auswahlstufe (9) nachgeschaltet ist, die dem Mengenstellwerk (3) ein Signal zuleitet, welches dem kleineren der aus dem Rauchkennfeld und aus der Drehmomentbegrenzungs-Kennlinie ermittelten Einspritzmengen für den jeweiligen Betriebspunkt entspricht, und mit einem elektronisch geregelten Spritzversteller (4) zur Veränderung des Spritzbeginns in Abhängigkeits von Betriebsparametern,
**dadurch gekennzeichnet**,
daß zur Regelung der Einspritzmenge in Abhängigkeit vom Istwert des Spritzbeginns ein zusätzliches Kennfeld (10) vorgesehen ist, in dem die für einen rauchfreien Betrieb maximale Einspritzmenge als Funktion der Drehzahl und des Ist-Spritzbeginns gespeichert ist, und daß das Signal aus dem zusätzlichen Kennfeld (10) ebenfalls der Minimalwert- Auswahlstufe (9) zugeleitet wird, dessen Ausgangssignal nunmehr dem kleinsten Wert der aus dem Rauchkennfeld (7), der Drehmomentbegrenzungs-Kennlinie (8) und dem zusätzlichen Kennfeld (10) ermittelten Einspritzmengen entspricht.

2. Kraftstoff-Einspritzvorrichtung nach Anspruch 1, dadurch gekennzeichnet, daß in dem Kennfeld (10) die maximale Einspritzmenge als Funktion der Abweichung des Ist-Spritzbeginns vom Soll-Spritzbeginn in Abhängigkeit von der Drehzahl gespeichert ist.

## Claims

1. Fuel-injection device for an air-compressing internal combustion engine (1), with an electronic control unit (6) for a quantity adjustment mechanism (3) for determining the injection quantity, which unit comprises at least one smoke characteristic diagram (7) with injection quantity values in accordance with the air pressure and speed or air mass and speed, and a torque limit characteristic (8) with injection quantity values in accordance with the speed, a minimum value selection stage (9) being connected after the diagram (7) and characteristic (8) and delivering to the quantity adjustment mechanism (3) a signal corresponding to the smaller of the injection quantities determined for the respective operating point from the smoke characteristic diagram and the torque limit characteristic, and with an electronically controlled injection timing mechanism (4) for varying the commencement of injection in accordance with operating parameters, characterised in that an additional characteristic diagram (10) is provided to control the injection quantity in accordance with the actual value of the commencement of injection, in which diagram the maximum injection quantity for smokeless operation is stored as a function of the speed and the actual commencement of injection, and that the signal from the additional characteristic diagram (10) is also delivered to the minimum value selection stage (9), the output signal of which now corresponds to the smallest value of the injection quantities determined from the smoke characteristic diagram (7), the torque limit characteristic (8) and the additional characteristic diagram (10).

2. Fuel-injection device according to claim 1, characterised in that the maximum injection quantity is stored in the characteristic diagram (10) as a function of the deviation of the actual commencement of injection from the desired commencement of injection in accordance with the speed.

## Revendications

1. Dispositif d'injection de carburant pour un moteur à combustion interne à compression d'air (1), comprenant une unité de commande électronique (6) pour un régulateur de débit (3) en vue de la détermination de la quantité de carburant injectée, qui comprend au moins un diagramme caractéristique de fumée (7) avec les valeurs des quantités de carburant injectées en fonction de la pression atmosphérique et de la vitesse de rotation ou de la masse d'air et de la vitesse de rotation ainsi qu'une courbe caractéristique de limitation de couple de rotation (8) avec les valeurs des quantités de carburant injectées en fonction de la vitesse de rotation, suivis d'un sélecteur de valeur minimale (9) qui transmet au régulateur de débit (3) un signal qui correspond à la quantité de carburant injectée la plus faible déterminée pour le point de fonctionnement considéré dans le diagramme caractéristique de fumée et dans la courbe caractéristique de limitation de couple de rotation, et un régulateur d'injection (4) réglé électroniquement pour modifier le début d'injection en fonction des paramètres de fonctionnement, **caractérisé en ce** que pour la régulation de la quantité de carburant injectée en fonction de la valeur effective du début d'injection, il est prévu un diagramme caractéristique (10) supplémentaire dans lequel la quantité d'injection maximale pour un fonctionnement sans fumée est stockée en fonction de la vitesse de rotation et de la valeur effective du début d'injection, et que le signal provenant du diagramme caractéristique supplémentaire (10) est également transmis au sélecteur de valeur minimale (9) dont le signal de sortie correspond maintenant à la valeur la plus faible des quantités de carburant injectées déterminées à partir du diagramme caractéristique de fumée (7), de la courbe caractéristique de limitation de couple de rotation (8) et du diagramme caractéristique supplémentaire (10).

2. Dispositif d'injection de carburant selon la revendication 1, caractérisé en ce que dans le diagramme caractéristique (10) la quantité d'injection maximale est stockée en fonction de l'écart entre la valeur effective du début d'injection et la valeur de consigne du début d'injection en fonction de la vitesse de rotation.
